# EUROPEAN PATENT SPECIFICATION

(11) **EP 4 391 132 B1**
(45) Date of publication and mention of the grant of the patent: **28.10.2026**
(21) Application number: 23863548.6
(22) Date of filing: 08.09.2023
(51) Int. Cl.: H01M 10/04

(54) **MICRO-SMALL CELL ASSEMBLY DEVICE AND ELECTRODE STACK MANUFACTURING METHOD USING SAME**
MIKROKLEINZELLIGE ANORDNUNGSVORRICHTUNG UND ELEKTRODENSTAPELHERSTELLUNGSVERFAHREN DAMIT
DISPOSITIF D'ASSEMBLAGE DE PETITES ET MICRO-CELLULES ET PROCÉDÉ DE FABRICATION D'EMPILEMENT D'ÉLECTRODES LE METTANT EN OUVRE

(30) Priority: 08.09.2022 KR 20220114355
(43) Date of publication of application: 26.06.2024
(73) Proprietor: LG Energy Solution, Ltd., Seoul 07335 (KR)
(72) Inventor: KIM, Min Jung, Daejeon 34122 (KR); SEO, Tai Joon, Daejeon 34122 (KR); CHOI, Ha Ye Lin, Daejeon 34122 (KR)
(74) Representative: Goddar, Heinz J.
(86) International application number: PCT/KR2023/013489
(87) International publication number: WO 2024/054084

(56) References cited:
- CN-U- 214 843 111
- JP-A- 2012 234 812
- KR-A- 20180 138 533
- KR-A- 20210 058 641
- KR-A- 20220 006 359
- KR-A- 20220 031 440
- KR-B1- 102 430 493

## Description

### [Technical Field]

This application claims the benefit of priority to Korean Patent Application No. 2022-0114355 filed on September 8, 2022.

The present invention relates to a subminiature cell assembly apparatus and an electrode stack manufacturing method using the same. More particularly, the present invention relates to a subminiature cell assembly apparatus capable of preventing an overhang reversal phenomenon due to dislocation of an electrode when manufacturing an electrode stack mounted in a subminiature cell and an electrode stack manufacturing method using the same.

### [Background Art]

Secondary batteries are used in a variety of devices, from mobile devices to electric vehicles. A plurality of battery cells is disposed in small devices, but a battery module including a plurality of battery cells electrically connected to each other or a battery pack including a plurality of battery modules is used in vehicles, etc.

In particular, a small-sized subminiature battery cell (hereinafter referred to as a "subminiature cell") is used in small devices such as VR glasses. Due to the small size thereof, the subminiature cell is prone to defects, such as overhang reversal, due to small errors in position of an electrode in an electrode assembly.

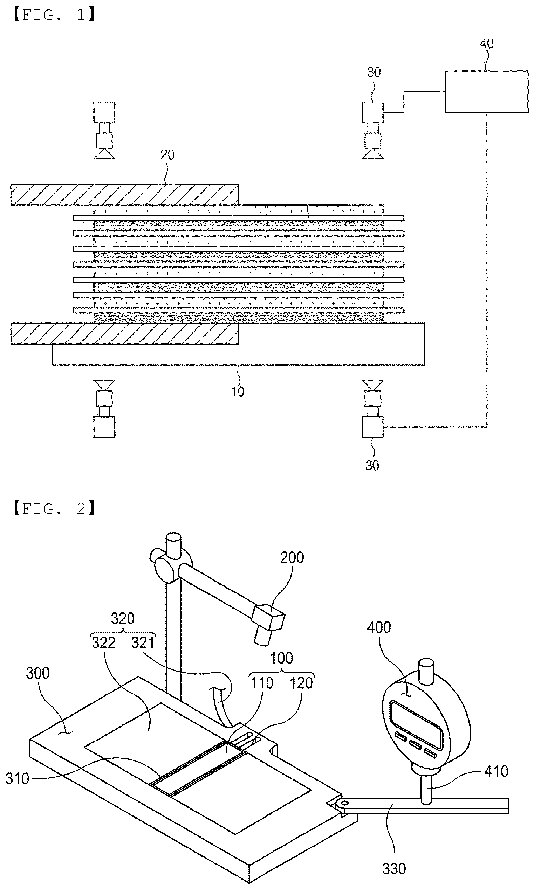

FIG. 1 is a plan view showing a conventional electrode assembly manufacturing apparatus. The conventional electrode assembly manufacturing apparatus shown in FIG. 1 includes a table 10, a gripper 20 configured to transfer a stack to an upper surface of the table 10, and a measurement member 30 configured to photograph the stack.

In an electrode assembly manufacturing apparatus disclosed in Patent Document 1, a stack stacked by a loading member (not shown) is seated on a table 10 using a gripper 30, and a reference line and an edge line of the stack are compared with each other using a measurement member 30 constituted by vision cameras located above and under the table 10 to determine whether the stack is dislocated.

In the conventional electrode assembly manufacturing apparatus, the positions of an electrode and a separator are checked through the measurement member 30 and readjusted to prevent an overhang reversal phenomenon; however, there is a problem that, since dislocation of the electrode and the separator is checked through the measurement member 30 and the positions of the electrode and the separator are readjusted, the time required for the process increases, whereby manufacturing efficiency is lowered.

In addition, when stacking electrodes, there is a clearance size based on the size of each electrode, whereby no defects occur due to some degree of error.

When manufacturing a subminiature cell using the apparatus disclosed in Patent Document 1, defects are easily caused by very small alignment errors, and in the conventional apparatus, the defect rate sharply rises when manufacturing subminiature cells.

### (Prior Art Document)

(Patent Document 1) Korean Patent Application Publication No. 2021-0061112

The document CN 214 843 111 U discloses a multilayer circuit board jig including a movable depth gauge for measuring a step groove depth.

### [Disclosure]

### [Technical Problem]

The present invention has been made in view of the above problems, and it is an object of the present invention to provide a subminiature cell assembly apparatus capable of preventing defects, such as crumpling and dislocation of a separator and misalignment of an electrode due to static electricity, etc., when stacking the electrode and the separator and an electrode stack manufacturing method using the same.

It is another object of the present invention to provide a subminiature cell assembly apparatus capable of aligning the position of an electrode in a step of stacking the electrode and a separator, whereby manufacturing process efficiency is improved, and an electrode stack manufacturing method using the same.

### [Technical Solution]

In order to accomplish the above objects, the present invention provides a subminiature cell assembly apparatus including a jig unit (100) configured to allow an electrode and a separator to be stacked on an upper surface thereof, the upper surface being flat, a laser radiation unit (200) located above the jig unit (100), a support unit (300) provided with a jig groove (310) into which the jig unit (100) is inserted, the support unit comprising a vacuum suction portion (320) located at each of opposite sides of the jig groove (310), and a display unit (400) configured to measure and display the relative height of the jig unit (100) or the support unit (300), wherein the jig unit (100) or the support unit (300) is movable relative to the support unit or the jig unit in a vertical direction.

The laser radiation unit (200) may radiate a laser along at least one side of the jig unit (100).

A subminiature cell may include a negative electrode (A) that is larger than a positive electrode (C), and the laser radiation unit (200) may radiate a laser along one side at which the negative electrode (A) is disposed.

The jig unit (100) may include a jig center portion (110) configured to allow the electrode and the separator to be stacked thereon and an auxiliary jig portion (120) disposed at one side of the jig center portion (110), the auxiliary jig portion being configured to allow an electrode tab of the electrode to be seated therein.

Both a positive electrode tab and a negative electrode tab of the electrode may be disposed at the same side.

The vacuum suction portion (320) may include a vacuum nozzle (321) provided with a plurality of holes or apertures and a vacuum pad (322) disposed at an upper surface of the vacuum nozzle (321), the vacuum pad including a porous material.

The subminiature cell assembly apparatus may further include an electrode transfer unit (500) configured to transfer the electrode to the jig unit (100) and a separator stacking unit configured to unroll a separator from a separator roll disposed at an upper surface of the support unit (300) so as to be stacked on the electrode in a zigzag fashion.

The subminiature cell may include the electrode that is rectangular in shape and has a long side length of 10 cm or less and a short side length of 2 cm or less.

In addition, the present invention provides an electrode stack manufacturing method including 1) forming a positioning guideline through the laser radiation unit (200), 2) seating an electrode on the jig unit (100) along the positioning guideline, 3) seating a separator on an upper surface of the electrode and fixing the separator through the vacuum pad, and 4) downwardly moving the jig unit to a predetermined height or upwardly moving the support unit to a predetermined height.

The separator may be seated in a zigzag fashion, and the jig unit or the support unit may be moved while a length change value through the display unit is identified when the jig unit is downwardly moved to the predetermined height or the support unit is upwardly moved to the predetermined height.

The positioning guideline may be a guideline for one side of a negative electrode, and a positive electrode may be disposed at a position spaced apart from the guideline by a predetermined distance, or a positive electrode tab may be inserted into an electrode tab insertion groove of the jig groove of the support unit and one side of the positive electrode may be disposed in parallel to the positioning guideline.

### [Advantageous Effects]

As is apparent from the above description, the present invention has a merit that a vacuum suction portion is provided to fix a separator, whereby it is possible to prevent defects such as crumpling and dislocation of the separator due to static electricity, etc.

In addition, the present invention has an advantage that the stacking position of the electrode is guided through a laser radiation unit, whereby the electrode may be stacked in an aligned state in an electrode stack manufacturing process, and therefore it is possible to omit an additional process to prevent an overhang reversal phenomenon, thereby improving manufacturing process efficiency.

### [Description of Drawings]

FIG. 1 is a plan view showing a conventional electrode assembly manufacturing apparatus.
FIG. 2 is a perspective view showing a subminiature cell manufacturing apparatus according to the present invention.
FIG. 3 is a view showing a subminiature cell manufacturing method using the subminiature cell manufacturing apparatus according to the present invention.
FIG. 4 is an enlarged plan view of a jig unit according to the present invention.
FIG. 5 is an enlarged plan view showing the state in which an electrode stack is seated on the jig unit according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a subminiature cell assembly apparatus according to the present invention and an electrode stack manufacturing method using the same will be described with reference to the accompanying drawings.

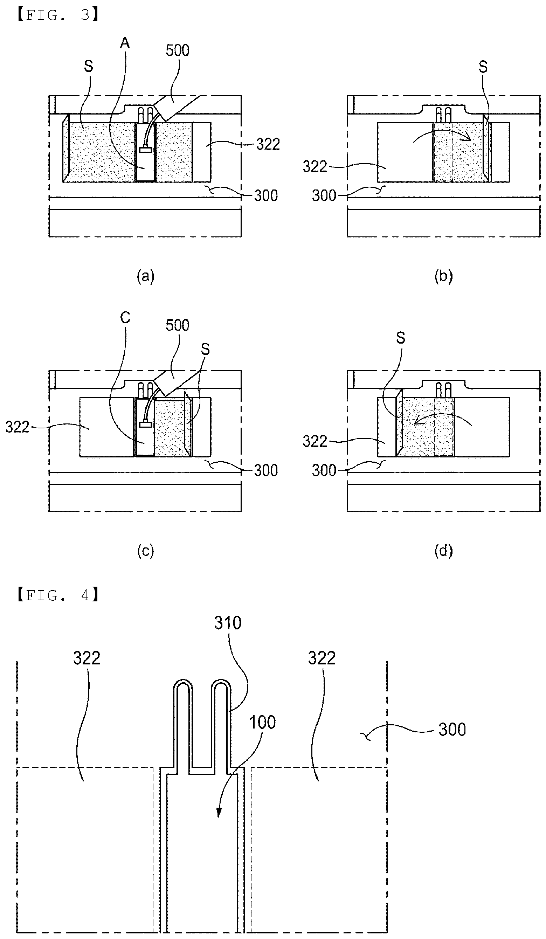

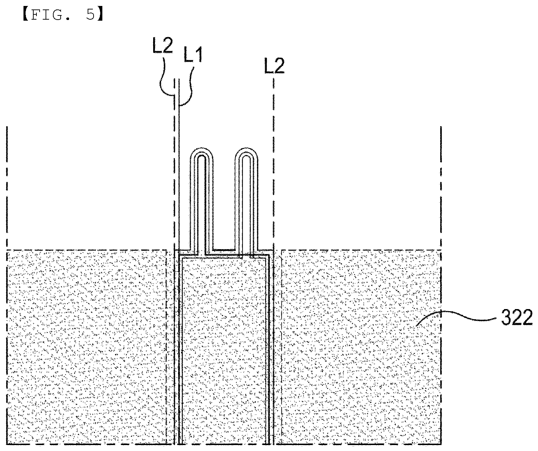

FIG. 2 is a perspective view showing a subminiature cell manufacturing apparatus according to the present invention, FIG. 3 is a view showing a subminiature cell manufacturing method using the subminiature cell manufacturing apparatus according to the present invention, FIG. 4 is an enlarged plan view of a jig unit according to the present invention, and FIG. 5 is an enlarged plan view showing the state in which an electrode stack is seated on the jig unit according to the present invention.

Referring to FIGs. 2 to 5, a subminiature cell manufacturing apparatus according to a preferred embodiment of the present invention includes a jig unit 100, a laser radiation unit 200, a support unit 300, a display unit 400, and an electrode transfer unit 500.

An electrode and a separator may be stacked at an upper surface of the jig unit 100, and the jig unit may include a jig center portion 110 and an auxiliary jig portion 120.

The jig center portion 110 may support a coated portion of the electrode seated on the jig unit 100 at which an electrode active material is applied to an electrode current collector and the separator S.

The auxiliary jig portion 120 may be constituted by a pair of flat plates extending from one side of the jig center portion 110 while being spaced apart from each other by a predetermined distance, and may support an electrode tab protruding from the electrode seated on the jig center portion 110 so as to extend in one direction.

The jig unit 100 may be similar in shape to the electrode stacked thereon, and may have an area equal to or greater than the area of the electrode.

The laser radiation unit 200, which is configured to radiate a linear laser in order to guide the stacking position of the electrodes, may radiate a laser along one side of the jig unit 100.

Although one laser radiation unit 200 is shown in FIG. 2, two laser radiation units 200 may be provided as needed, wherein one laser radiation unit 200 may guide the position of one surface of a negative electrode A that is stacked and the other laser radiation unit 200 may guide the position of one surface of a positive electrode that is stacked.

In addition, when two laser radiation units 200 are provided, radiated lasers may have different colors for clearer distinction therebetween.

The support unit 300 may be formed in a flat shape, may be moved in a vertical direction by a hydraulic device, etc., and may be provided with a jig groove 310, a vacuum suction portion 320, and an extension portion 330. The support unit 300 may be moved in the vertical direction, or the jig unit 100 may be moved relative to the support unit 300 in the vertical direction.

The jig groove 310 may be formed by incising a part of the support unit 300, and the jig unit 100 may be located in the jig groove 310.

Accordingly, the shape of the jig groove 310 may be the same as the shape of an edge of the jig unit 100, and the area of the jig groove may be greater than the area of the jig unit 100. The reason for this is that it is necessary to prevent damage to equipment due to friction between the jig groove 310 and the jig unit 100 when the support unit 300 is moved in the vertical direction.

The vacuum suction portion 320 is configured to fix the separator S when the electrode and the separator S are stacked to form an electrode stack in order to prevent defects of the separator S, such as dislocation and crumpling of the separator, and includes a vacuum nozzle 321 and a vacuum pad 322.

The vacuum nozzle 321 is a tube provided with a plurality of holes or apertures, wherein one side of the vacuum nozzle is connected to a lower surface of the vacuum pad 322 and the other side of the vacuum nozzle is connected to a vacuum pump (not shown).

The vacuum pad 322 may be formed in a flat shape, may be made of a porous material, and may be formed at each of opposite sides of the jig groove 310 such that the vacuum pads are spaced apart from each other by a predetermined distance.

The vacuum pad 322 is inserted into the support unit 300 such that the height of the vacuum pad is equal to the height of the support unit 300, whereby there is an advantage in that air located on an upper surface of the vacuum pad 322 may be suctioned in by the vacuum nozzle 321 to fix the separator S, whereby it is possible to prevent dislocation and crumpling of the separator due to static electricity, etc.

The extension portion 330 may be formed in the shape of a bar protruding so as to extend from one edge of the support unit 300, may be formed in the shape of a bar integrally formed with the support unit 300 and protruding therefrom, or may be constituted by individual bar-shaped extension portions 330 coupled to one edge of the support unit 300 by bolting or welding.

At this time, the extension portion 330 may be formed such that the height of the extension portion is equal to the height of the support unit 300.

The display unit 400, which is configured to measure and display the relative height of the jig unit 100 or the support unit 300, may be provided at an upper part thereof with a measurement portion 410 formed in the shape of a column extending a predetermined length.

The display unit 400 may be located at the upper side of the extension portion 330, and a lower end of the measurement portion 410 may be in tight contact with an upper surface of the extension portion 330 to measure the height of the extension portion 330 when the extension portion is moved upwards, thereby measuring the relative height of the jig unit 100 or the support unit 300

Although the measurement portion 410 is shown as being formed in the shape of a column in FIG. 2, a measurement portion 410 configured to radiate a laser in order to measure the distance may be provided as needed; however, the present invention is not limited thereto as long as it is possible to measure change in height of the extension portion 330. Alternatively, the height of one side of the support unit 300 may be directly measured without the separate extension portion 330. Referring to FIG. 2, which shows an example, the separate extension portion 330 is provided in order to provide a space necessary to stack the separator, the electrode, and the like.

The electrode transfer unit 500, which is configured to move the positive electrode C and the negative electrode A so as to be stacked on the upper surface of the jig unit 100, may be connected to the vacuum pump to move the positive electrode C and the negative electrode A in a vacuum suction state. The electrode transfer unit 500 may transfer the electrodes using physical force in addition to using vacuum, and this may be the same as a general means used in an electrode stacking apparatus.

An electrode stack manufacturing method using the subminiature cell assembly apparatus according to the present invention includes the steps of 1) forming a positioning guideline through the laser radiation unit 200, 2) seating an electrode on the jig unit 100 along the positioning guideline, 3) seating a separator on an upper surface of the electrode and fixing the separator through the vacuum pad, and 4) downwardly moving the jig unit to a predetermined height or upwardly moving the support unit to a predetermined height.

In step 1) of forming a positioning guideline through the laser radiation unit 200, a linear laser is radiated to one side of the jig unit 100 or the jig groove 310 to form a negative electrode guideline L1, as shown in FIG. 5.

In FIG. 5, the lines at the part at which an electrode tab is located indicate the jig groove, the auxiliary jig portion, and the electrode, in an order starting from the outside.

Although only the negative electrode guideline L1 is shown in FIG. 5, another laser radiation unit 200 may be added to further form a positive electrode guideline necessary to guide the stacking position of a positive electrode C as needed. At this time, the laser color of the negative electrode guideline L1 and the laser color of the positive electrode guideline may be different from each other for easy distinction therebetween.

In step 2) of seating an electrode on the jig unit 100 along the positioning guideline, a negative electrode A is located and stacked on the upper surface of the jig unit 100 through the electrode transfer unit 500. At this time, the negative electrode may be located and stacked along the negative electrode guideline L1 shown in FIG. 5.

Here, a separator S may be seated on the jig unit 100 before the negative electrode A is seated on the jig unit 100 (see (a) of FIG. 3).

In step 3) of seating a separator on an upper surface of the electrode and fixing the separator through the vacuum pad, a separator S is seated on an upper surface of the seated negative electrode A, and the separator S is suctioned and fixed through the vacuum pad 322 located in the vicinity of the jig groove 310 so as to be spaced apart therefrom, whereby it is possible to prevent dislocation and crumpling of the separator S due to static electricity, etc. (see (b) of FIG. 3).

The separator S seated on the upper surface of the negative electrode A may be folded in the vicinity of a separator guideline L2 to cover the upper surface of the negative electrode A.

Step 4) of downwardly moving the jig unit to a predetermined height or upwardly moving the support unit to a predetermined height is a step of downwardly moving the jig unit 100 or upwardly moving the support unit 300 through a controller (not shown), wherein the jig unit or the support unit is moved such that the height of an electrode stack seated on the jig unit 100 and the height of the support unit 300 are the same or such that the highest part of the electrode stack is lower than the upper surface of the support unit 300.

At this time, the height formed through movement is controlled by identifying the value of the length change through the display unit 400 located in the vicinity of the support unit 300.

Subsequently, a positive electrode C is stacked on an upper surface of the separator S using the electrode transfer unit 500. At this time, the positive electrode C may be disposed at a position spaced apart from the negative electrode guideline L1 by a predetermined distance, or an electrode tab may be inserted into an electrode tab insertion groove of the jig groove 310 of the support unit 300 so as to be inserted into and seated in the auxiliary jig portion 120, which is configured to support the electrode tab, and then one side of the positive electrode C may be seated so as to be disposed in parallel to the negative electrode guideline L1 (see (c) of FIG. 3).

In addition, the separator S, which is configured to cover an upper surface of the positive electrode C, may be folded in the vicinity of the separator guideline L2 to cover the upper surface of the positive electrode C (see (d) of FIG. 3).

That is, the separator S may be stacked in a zigzag fashion, and the separator S may be located between the positive electrode C and the negative electrode A.

In addition, a subminiature cell manufactured using the subminiature cell assembly apparatus according to the present invention may be a subminiature cell configured such that an electrode is rectangular in shape and has a long side length of 10 cm or less and a short side length of 2 cm or less.

Although the specific details of the present invention have been described in detail, those skilled in the art will appreciate that the detailed description thereof discloses only preferred embodiments of the present invention and thus does not limit the scope of the present invention.

### (Description of Reference Symbols)

100: Jig unit
110: Jig center portion
120: Auxiliary jig portion
200: Laser radiation unit
300: Support unit
310: Jig groove
320: Vacuum suction portion
321: Vacuum nozzle
322: Vacuum pad
330: Extension portion
400: Display unit
410: Measurement portion
500: Electrode transfer unit
A: Negative electrode
C: Positive electrode
S: Separator
L1: Negative electrode guideline
L2: Separator guideline

## Claims

1. A subminiature cell assembly apparatus, comprising:
a jig unit (100) configured to allow an electrode (A, C) and a separator (S) to be stacked on an upper surface thereof, the upper surface being flat;
a laser radiation unit (200) located above the jig unit (100);
a support unit (300) provided with a jig groove (310) into which the jig unit (100) is inserted, the support unit (300) comprising a vacuum suction portion (320) located at each of opposite sides of the jig groove (310); and
a display unit (400) configured to measure and display a relative height of the jig unit (100) or the support unit (300), wherein
the jig unit (100) or the support unit (300) is movable relative to the support unit (300) or the jig unit (100) in a vertical direction.

2. The subminiature cell assembly apparatus according to claim 1, wherein the laser radiation unit (200) is configured to radiate a laser along at least one side of the jig unit (100).

3. The subminiature cell assembly apparatus according to claim 2, wherein a subminiature cell includes a negative electrode (A) that is larger than a positive electrode (C), and
wherein the laser radiation unit (200) is configured to radiate a laser along one side at which the negative electrode (A) is disposed.

4. The subminiature cell assembly apparatus according to claim 1, wherein the jig unit (100) comprises:
a jig center portion (110) on which the electrode (A, C) and the separator (S) are stackable; and
an auxiliary jig portion (120) disposed at one side of the jig center portion (110), the auxiliary jig portion (120) being configured to seat an electrode tab of the electrode (A, C) thereon.

5. The subminiature cell assembly apparatus according to claim 4, wherein the auxiliary jig portion is configured to seat a positive electrode tab and a negative electrode tab of the electrode (A, C) at the same side.

6. The subminiature cell assembly apparatus according to claim 1, wherein the vacuum suction portion (320) comprises:
a vacuum nozzle (321) provided with a plurality of holes or apertures; and
a vacuum pad (322) disposed at an upper surface of the vacuum nozzle (321), the vacuum pad (322) comprising a porous material.

7. The subminiature cell assembly apparatus according to claim 1, further comprising:
an electrode transfer unit (500) configured to transfer the electrode (A, C) to the jig unit (100); and
a separator stacking unit configured to unroll a separator (S) from a separator roll disposed at an upper surface of the support unit (300) so as to be stacked on the electrode (A, C) in a zigzag fashion.

8. The subminiature cell assembly apparatus according to claim 2, wherein a subminiature cell includes an electrode (A, C) that is rectangular in shape and has a long side length of 10 cm or less and a short side length of 2 cm or less.

9. An electrode stack manufacturing method using the subminiature cell assembly apparatus according to any one of claims 1 to 8, the electrode stack manufacturing method comprising:
1) forming a positioning guideline through the laser radiation unit (200);
2) seating an electrode on the jig unit (100) along the positioning guideline;
3) seating a separator (S) on an upper surface of the electrode and fixing the separator (S) through the vacuum pad (322); and
4) downwardly moving the jig unit (100) to a predetermined height or upwardly moving the support unit (300) to a predetermined height.

10. The electrode stack manufacturing method according to claim 9, wherein
the separator (S) is seated in a zigzag fashion, and
the jig unit (100) or the support unit (300) is moved while a length change value through the display unit (400) is identified when the jig unit (100) is downwardly moved to the predetermined height or the support unit (300) is upwardly moved to the predetermined height.

11. The electrode stack manufacturing method according to claim 9, wherein
the positioning guideline is a guideline (L1) for one side of a negative electrode (A), and
a positive electrode (C) is disposed at a position spaced apart from the guideline (L1) by a predetermined distance, or
a positive electrode tab is inserted into an electrode tab insertion groove of the jig groove (321) of the support unit (300) and one side of the positive electrode (C) is disposed in parallel to the positioning guideline.

## Patentansprüche

1. Subminiatur-Zellenanordnungsvorrichtung aufweisend:
eine Aufspanneinheit (100), die konfiguriert ist, um zu ermöglichen, dass eine Elektrode (A, C) und ein Separator (S) auf einer oberen Fläche davon gestapelt werden, wobei die obere Fläche flach ist;
eine Laserstrahlungseinheit (200), die über der Aufspanneinheit (100) angeordnet ist;
eine Stützeinheit (300), die mit einer Aufspannnut (310) versehen ist, in die die Aufspanneinheit (100) eingesetzt ist, wobei die Halteeinheit (300) einen Vakuumsaugabschnitt (320) aufweist, der an jeder von gegenüberliegenden Seiten der Aufspannnut (310) angeordnet ist; und
eine Anzeigeeinheit (400), die konfiguriert ist, um eine relative Höhe der Aufspanneinheit (100) oder der Stützeinheit (300) zu messen und anzuzeigen, wobei
die Aufspanneinheit (100) oder die Stützeinheit (300) relativ zu der Stützeinheit (300) oder der Aufspanneinheit (100) in einer vertikalen Richtung bewegbar ist.

2. Subminiatur-Zellenanordnungsvorrichtung nach Anspruch 1, wobei die Laserstrahlungseinheit (200) konfiguriert ist, um einen Laser entlang mindestens einer Seite der Aufspanneinheit (100) abzustrahlen.

3. Subminiatur-Zellenanordnungsvorrichtung nach Anspruch 2, wobei eine Subminiatur-Zelle eine negative Elektrode (A) aufweist, die größer als eine positive Elektrode (C) ist, und
wobei die Laserstrahlungseinheit (200) konfiguriert ist, um einen Laser entlang einer Seite abzustrahlen, an der die negative Elektrode (A) angeordnet ist.

4. Subminiatur-Zellenanordnungsvorrichtung nach Anspruch 1, wobei die Aufspanneinheit (100) aufweist:
einen Aufspannmittelabschnitt (110), auf dem die Elektrode (A, C) und der Separator (S) stapelbar sind; und
einen Hilfsaufspannabschnitt (120), der an einer Seite des Aufspannmittelabschnitts (110) angeordnet ist, wobei der Hilfsaufspannabschnitt (120) konfiguriert ist, um eine Elektrodenlasche der Elektrode (A, C) darauf zu lagern.

5. Subminiatur-Zellenanordnungsvorrichtung nach Anspruch 4, wobei der Hilfsaufspannabschnitt konfiguriert ist, um eine positive Elektrodenlasche und eine negative Elektrodenlasche der Elektrode (A, C) an der gleichen Seite zu lagern.

6. Subminiatur-Zellenanordnungsvorrichtung nach Anspruch 1, wobei der Vakuumsaugabschnitt (320) aufweist:
eine Vakuumdüse (321), die mit mehreren Löchern oder Öffnungen ausgebildet ist; und
ein Vakuumkissen (322), das an einer oberen Oberfläche der Vakuumdüse (321) angeordnet ist, wobei das Vakuumkissen (322) ein poröses Material enthält.

7. Subminiatur-Zellenanordnungsvorrichtung nach Anspruch 1, ferner aufweisend:
eine Elektrodentransfereinheit (500), die konfiguriert ist, um die Elektrode (A, C) zu der Aufspanneinheit (100) zu transferieren; und
eine Separatorstapeleinheit, die konfiguriert ist, um einen Separator (S) von einer Separatorrolle abzurollen, die an einer oberen Oberfläche der Trägereinheit (300) angeordnet ist, um auf der Elektrode (A, C) in einer Zickzack-Weise gestapelt zu werden.

8. Subminiatur-Zellenanordnungsvorrichtung nach Anspruch 2, wobei eine Subminiatur-Zelle eine Elektrode (A, C) aufweist, die eine rechteckige Form aufweist und eine lange Seitenlänge von 10 cm oder weniger und eine kurze Seitenlänge von 2 cm oder weniger aufweist.

9. Elektrodenstapelherstellungsverfahren unter Verwendung der Subminiatur-Zellenanordnungsvorrichtung nach einem der Ansprüche 1 bis 8, wobei das Elektrodenstapelherstellungsverfahren aufweist:
1) Bilden einer Positionierungsrichtlinie durch die Laserstrahlungseinheit (200);
2) Lagern einer Elektrode auf der Aufspanneinheit (100) entlang der Positionierungsrichtlinie;
3) Lagern eines Separators (S) auf einer oberen Oberfläche der Elektrode und Fixieren des Separators (S) durch das Vakuumkissen (322); und
4) Abwärtsbewegen der Aufspanneinheit (100) auf eine vorbestimmte Höhe oder Aufwärtsbewegen der Stützeinheit (300) auf eine vorbestimmte Höhe.

10. Elektrodenstapelherstellungsverfahren nach Anspruch 9, wobei
der Separator (S) in einer Zickzack-Art gelagert ist, und
die Aufspanneinheit (100) oder die Stützeinheit (300) bewegt wird, während ein Längenänderungswert durch die Anzeigeeinheit (400) identifiziert wird, wenn die Aufspanneinheit (100) abwärts auf die vorbestimmte Höhe bewegt wird oder die Stützeinheit (300) aufwärts auf die vorbestimmte Höhe bewegt wird.

11. Elektrodenstapelherstellungsverfahren nach Anspruch 9, wobei
die Positionierungsrichtlinie eine Richtlinie (L1) für eine Seite einer negativen Elektrode (A) ist, und
eine positive Elektrode (C) an einer Position angeordnet ist, die von der Richtlinie (L1) um einen vorbestimmten Abstand beabstandet ist, oder
eine positive Elektrodenlasche in eine Elektrodenlascheneinsetznut der Aufspannnut (321) der Stützeinheit (300) eingesetzt ist und eine Seite der positiven Elektrode (C) parallel zu der Positionierungsrichtlinie angeordnet ist.

## Revendications

1. Appareil d'assemblage de piles subminiatures, comportant :
une unité formant gabarit (100) configurée pour permettre l'empilement d'une électrode (A, C) et d'un séparateur (S) sur une surface supérieure de celle-ci, la surface supérieure étant plate ;
une unité de rayonnement laser (200) située au-dessus de l'unité formant gabarit (100) ;
une unité de support (300) dotée d'une rainure de gabarit (310) dans laquelle l'unité formant gabarit (100) est insérée, l'unité de support (300) comportant une partie d'aspiration sous vide (320) située au niveau de chacun des côtés opposés de la rainure de gabarit (310) ; et
une unité d'affichage (400) configurée pour mesurer et afficher une hauteur relative de l'unité formant gabarit (100) ou de l'unité de support (300), dans lequel
l'unité formant gabarit (100) ou l'unité de support (300) est mobile par rapport à l'unité de support (300) ou l'unité formant gabarit (100) dans une direction verticale.

2. Appareil d'assemblage de piles subminiatures selon la revendication 1, dans lequel l'unité de rayonnement laser (200) est configurée pour faire rayonner un laser le long d'au moins un côté de l'unité formant gabarit (100).

3. Appareil d'assemblage de piles subminiatures selon la revendication 2, dans lequel une pile subminiature comprend une électrode négative (A) qui est plus grande qu'une électrode positive (C), et
dans lequel l'unité de rayonnement laser (200) est configurée pour faire rayonner un laser le long d'un côté sur lequel l'électrode négative (A) est disposée.

4. Appareil d'assemblage de piles subminiatures selon la revendication 1, dans lequel l'unité formant gabarit (100) comporte :
une partie centrale de gabarit (110) sur laquelle l'électrode (A, C) et le séparateur (S) sont en mesure d'être empilés ; et
une partie auxiliaire de gabarit (120) disposée sur un côté de la partie centrale de gabarit (110), la partie auxiliaire de gabarit (120) étant configurée pour poser une languette d'électrode de l'électrode (A, C) sur celle-ci.

5. Appareil d'assemblage de piles subminiatures selon la revendication 4, dans lequel la partie auxiliaire de gabarit est configurée pour poser une languette d'électrode positive et une languette d'électrode négative de l'électrode (A, C) sur le même côté.

6. Appareil d'assemblage de piles subminiatures selon la revendication 1, dans lequel la partie d'aspiration sous vide (320) comporte :
un tube d'aspiration (321) doté d'une pluralité de trous ou d'ouvertures ; et
un tampon d'aspiration (322) disposé au niveau d'une surface supérieure du tube d'aspiration (321), le tampon d'aspiration (322) comportant un matériau poreux.

7. Appareil d'assemblage de piles subminiatures selon la revendication 1, comportant par ailleurs :
une unité de transfert d'électrode (500) configurée pour transférer l'électrode (A, C) sur l'unité formant gabarit (100) ; et
une unité d'empilement de séparateurs configurée pour dérouler un séparateur (S) en provenance d'un rouleau de séparateurs disposé au niveau d'une surface supérieure de l'unité de support (300) de manière à être empilé sur l'électrode (A, C) en zigzag.

8. Appareil d'assemblage de piles subminiatures selon la revendication 2, dans lequel une pile subminiature comprend une électrode (A, C) qui est de forme rectangulaire et qui a une longueur du grand côté de 10 cm ou moins et une longueur du petit côté de 2 cm ou moins.

9. Procédé de fabrication d'un empilement d'électrodes utilisant l'appareil d'assemblage de piles subminiatures selon l'une quelconque des revendications 1 à 8, le procédé de fabrication d'un empilement d'électrodes comportant les étapes consistant à :
1) former une ligne de guidage de positionnement à travers l'unité de rayonnement laser (200) ;
2) placer une électrode sur l'unité formant gabarit (100) le long de la ligne de guidage de positionnement ;
3) poser un séparateur (S) sur une surface supérieure de l'électrode et fixer le séparateur (S) à travers le tampon d'aspiration (322) ; et
4) déplacer l'unité formant gabarit (100) vers le bas jusqu'à une hauteur prédéterminée ou déplacer l'unité de support (300) vers le haut jusqu'à une hauteur prédéterminée.

10. Procédé de fabrication d'un empilement d'électrodes selon la revendication 9, dans lequel
le séparateur (S) est posé en zigzag, et
l'unité formant gabarit (100) ou l'unité de support (300) est déplacée tandis qu'une valeur de changement de longueur dans l'unité d'affichage (400) est identifiée lorsque l'unité formant gabarit (100) est déplacée vers le bas jusqu'à la hauteur prédéterminée ou l'unité de support (300) est déplacée vers le haut jusqu'à la hauteur prédéterminée.

11. Procédé de fabrication d'un empilement d'électrodes selon la revendication 9, dans lequel
la ligne de guidage de positionnement est une ligne de guidage (L1) pour un côté d'une électrode négative (A), et
une électrode positive (C) est disposée au niveau d'une position espacée de la ligne de guidage (L1) d'une distance prédéterminée, ou
une languette d'électrode positive est insérée dans une rainure d'insertion de languette d'électrode de la rainure de gabarit (321) de l'unité de support (300) et un côté de l'électrode positive (C) est disposé parallèlement à la ligne de guidage de positionnement.
